# EUROPÄISCHE PATENTSCHRIFT

(11) **EP 2 768 752 B1**
(45) Veröffentlichungstag und Bekanntmachung des Hinweises auf die Patenterteilung: **16.12.2015**
(21) Anmeldenummer: 12791683.1
(22) Anmeldetag: 19.10.2012
(51) Int. Cl.: B65G 51/06

(54) **HÜLSE FÜR EINE ROHRPOSTANLAGE MIT EINEM HÜLSENROHR**
CARTRIDGE FOR A PNEUMATIC MAIL SYSTEM COMPRISING A CARTRIDGE TUBE
CARTOUCHE POUR SYSTÈME DE POSTE PNEUMATIQUE COMPORTANT UN TUBE DE CARTOUCHE

(30) Priorität: 20.10.2011 AT 5702011
(43) Veröffentlichungstag der Anmeldung: 27.08.2014
(73) Patentinhaber: Ing. Sumetzberger GmbH, 1110 Wien (AT)
(72) Erfinder: Friedrich, Peter, 1040 Wien (AT)
(74) Vertreter: Müllner, Martin
(86) Internationale Anmeldenummer: PCT/AT2012/050167
(87) Internationale Veröffentlichungsnummer: WO 2013/056293

(56) Entgegenhaltungen:
- EP-A1- 0 508 048
- EP-A1- 0 697 354
- EP-A2- 0 726 207
- AT-U1- 11 306

## Beschreibung

### Technisches Gebiet

Die vorliegende Erfindung betrifft eine Hülse für eine Rohrpostanlage mit einem Hülsenrohr, das mit mindestens einem Deckel, der aus mehreren Deckelsektoren gebildet ist, verschlossen ist, wobei die Hülse mittels eines Gleitrings öffenbar und schließbar ist, wobei der Gleitring parallel zur Längsachse der Hülse bewegbar ist und das Hülsenrohr umschließt; die Deckelsektoren aus je zwei Teilbereichen bestehen, nämlich aus einem ersten Teilbereich und einem zweiten Teilbereich; die ersten Teilbereiche in Schileßsteilung das Hülsenrohr abschließen; die zweiten Teilbereiche an die ersten Teilbereiche angeformt sind, das Hülsenrohr in einem Endabschnitt umfassen und am Gleitring schwenkbar befestigt sind, wobei weiters ein Klemmring vorgesehen ist, der in Schließposition mit.den zweiten Teilbereichen der Deckelsektoren formschlüssig zusammenwirkt und so die Deckelsektoren geschlossen hält.

### Stand der Technik

Aus der WO 2010/136538 ist eine Hülse bekannt, bei der der Deckel bzw. die Deckelsektoren um Scharniere drehbar gelagert sind, wobei die Scharniere in einem Gleitring angeordnet sind. Dies erfordert eine gewisse Dicke des das Rohr umfassenden Gleitrings. Nachteilig ist bei dieser Hülse, dass der Raum für den Hülseninhalt bei kleinem Rohrdurchmesser der Rohrpostanlage mitunter nicht ausreichend ist. Außerdem ist eine Drehfeder am Scharnier eingebaut, die nur eine unzureichende Zuhaltekraft besitzt. Daher kann es insbesondere bei großen Hülsen, die schwere Lasten transportieren, zu ungewolltem Öffnen der Hülse sowohl im Rohr als auch in der Station der Rohrpostanlage kommen. Es kann auf diese Art auch zu diversen anderen Fehlern wie Einklemmen von Probenbeuteln, Verlust von Proben oder einer Blockierung der Hülse im Rohr kommen.

Aus der gattungsbildenden EP 0 697 354 A. Fig. 5-8 ist darüber hinaus bekannt geworden, einen Klemmring vorzusehen. Der Klemmring umgreift die zweiten Teilbereiche der Deckelsektoren in Schließposition. In diesem Fall presst der Klemmring In der Schließposition die Deckelsektoren in Richtung Längsachse der Hülse. Der Klemmring fixiert somit in der Schließposition die Deckelsektoren.

Aus der EP 0 508 048 A ist eine Hülse bekannt, bei der die Deckelsektoren an der Hülse drehbar gelagert sind. Die Schwenkachsen oder Deckelsektoren liegen zwar in unmittelbarer Nähe der Umfangfläche des Deckels, aber doch deutlich innerhalb der Umfangfläche. Mittels eines Gleitrings sind Riegelmittel verschiebbar. Hier umfassen in Schließstellung die Riegelmittel den Deckel an der Umfangfläche. Durch Verschieben der Riegelmittel parallel zur Rohrlängsachse weg vom Deckel wird der Deckel freigegeben; wenn die Hülse mit dem Deckel nach unten gehalten wird, öffnet der Deckel infolge der Schwerkraft. Durch Verschieben der Riegelmittel in die Gegenrichtung wird der Deckel zwangsweise geschlossen. Bei dieser Hülse ist die Schwenkachse des Deckels von der Längsachse des Rohres weniger weit entfernt als das Rohr selbst. Dadurch ist das Rohr auch nach vollständigem Öffnen des Deckels teilweise durch die Schwenkachse und das die Schwenkachse umgebende Material verschlossen. Dadurch ist diese Hülse für die Schwerrohrpost geeignet, aber für Einsatzgebiete mit geringem Rohrdurchmesser einer Rohrpostanlage nicht geeignet. Der verbleibende Platz für die zu transportierenden Produkte, die auch in die Hülse eingbringbar und wieder aus dieser herausnehmbar sein müssen, ist bei dieser Art von Hülse bei geringem Rohrdurchmesser zu gering.

### Darstellung der Erfindung

Es ist Aufgabe der vorliegenden Erfindung, die Hülse der eingangs genannten Art so zu verbessern, dass die Deckelsektoren im geschlossenen Zustand der Hülse auch dann in Position gehalten werden und kein Spiel aufweisen, wenn ein einfacher Klemmring nicht ausreicht. Außerdem soll die Hülse für kleine Rohrdurchmesser geeignet sein.

Diese Aufgaben werden durch eine Hülse der eingangs genannten Art erfindungsgemäß dadurch gelöst, dass der Klemmring einen oder mehrere axiale Vorsprünge aufweist, die in Schließposition in entsprechende Vertiefungen der zweiten Teilbereiche der Deckelsektoren formschlüssig eingreifen, oder dass die zweiten Teilbereiche der Deckelsektoren einen oder mehrere Vorsprünge aufweisen, die in Schließposition in entsprechende Vertiefungen des Klemmrings formschlüssig eingreifen.

Die Vorsprünge können Stifte sein, die in entsprechende Bohrungen eingreifen, sie können aber auch als Krelsringe ausgeführt sein, die in entsprechende kreisringförmige Nuten eingreifen. In beiden Fällen ergibt sich eine stabilere Verbindung als wenn der Klemmring die zweiten Tellbereichen der Deckelsektoren lediglich umgreift. Solch ein Umgreifen kann aber zusätzlich zur Erhöhung der Stabilität vorgesehen sein.

Es ist zweckmäßig, wenn der Gleitring mittels des Klemmrings parallel zur Längsachse der Hülse bewegbar ist. Auf diese. Weise ist es nicht notwendig, den Gleitring und den Klemmring unabhängig zu verschieben. Es genügt, den Klemmring zu verschieben, weil dieser den Gleitring mitnimmt.

Als günstig erweist sich, wenn der Klemmring rohrseitig Rastvorsprünge aufweist und die Deckelsektoren im zweiten Teilbereich gegengleiche Rastvertiefungen aufweisen bzw. der Klemmring die Vertiefungen aufweist und die Deckelsektoren die Vorsprünge aufweisen, sodass in Schließstellung die Rastvorsprünge in den Rastvertiefungen einrasten. Durch dieses Einrasten ist in Schließstellung eine definierte, gleichbleibende Lage des Klemmrings sichergestellt.

Bevorzugt weist der Gleitring mindestens eine Ausnehmung mit einer Begrenzung auf der vom Ende des Hülsenrohrs abgewandten Seite auf und der Klemmring besitzt rohrseitig mindestens eine Verdickung, die in der Ausnehmung achsparallel verschiebbar ist, wobei beim Öffnen die Verdickung auf dieser Begrenzung der Ausnehmung des Gleitrings in Aufsitz kommt und in der Offenstellung auf dieser Begrenzung aufsitzt. Durch das Vorsehen des eben genannten Merkmals wird eine sichere Mitnahme des Gleitrings und in weiterer Folge der Deckelsektoren durch den Klemmring gewährleistet.

Als günstig erweist sich, wenn der Gleitring mindestens eine Ausnehmung aufweist, die achsparallele Begrenzungen aufweist, und der Klemmring rohrseitig zumindest eine Verdickung besitzt, die in der zumindest einen Ausnehmung des Gleitrings in Umfangsrichtung formschlüssig eingreift. Durch diesen Formschluss wird ein Verschieben des Gleitrings gegen den Klemmring in Umfangsrichtung verhindert.

Vorzugsweise weist der Klemmring eine zum Rohrumfang parallele Nut auf der dem Hülsenrohr abgewandten Seite auf. Durch diese Nut wird ein sicheres formschlüssiges Eingreifen und anschließendes Festhalten des Klemmrings durch ein Festhalteelement in der Rohrpoststation erreicht. Diese Nut bietet daher eine wichtige Voraussetzung zum automatischen Öffnen der Hülse.

Insbesondere bei Hülsen für kleine Rohrdurchmesser ist es zweckmäßig, wenn zur schwenkbaren Befestigung der zweiten Teilbereiche am Gleitring von den zweiten Teilbereichen aus zumindest je eine Bandfeder anschließt und in dem Gleitring fixiert ist. Dies nimmt weniger Platz ein als das Scharnier, wie es in der WO WO 2010/136538 --. beschrieben ist. Außerdem ersetzt diese Bandfeder nicht nur das Scharnier, sondern auch die Drehfeder. Die Verbindung der Deckelsektoren mit dem Gleitring mit einer Bandfeder kann außerdem Montagekosten sparen, da die Bandfeder als Spritzgussteil direkt mit dem Deckelsektor mitgespritzt werden kann.

Vorteilhaft ist, wenn die Bandfedern im Gleitring mit einem unlösbaren Schnappverschluss gehalten sind. Dies stellt eine besonders einfache und kostengünstige Verbindung zwischen Bandfeder und Gleitring dar.

Alternativ dazu kann vorgesehen sein, dass der Gleitring im vom Ende des Hülsenrohrs fernen Bereich Befestigungsausnehmungen, die zur Aufnahme von Befestigungsmitteln zur Befestigung der Bandfedern geeignet sind, besitzt. Die Bandfedern können mit dem Gleitring nicht nur durch eine unlösbare Schnappverbindung verbunden sein. Die Verbindung kann auch mit Schrauben, Nieten und dergleichen erfolgen. Auch die Verbindung der Bandfedern mit den Deckelsektoren kann über eben solche Schrauben, Nieten und dergleichen sichergestellt werden. Die Bandfedern selbst müssen nicht zwangsweise Spritzgussteile sein. Es kann sich hierbei um Federstahl, Gummi oder andere biegbare Materialien handeln.

Als vorteilhaft erweist sich weiters, wenn an den einzelnen Deckelsektoren im zweiten Teilbereich Hülsenringteile aufgebracht sind. Beim Transport der Hülse in der Rohrpostanlage treten oft hohe Geschwindigkeiten und Richtungsänderungen auf. Durch das Vorsehen von Hülsenringen wird die seitliche Krafteinwirkung auf die Hülse gedämpft.

Damit die verschiedenen Hülsentypen bzw. der verschiedene Inhalt der einzelnen Hülsen automatisch unterschieden werden kann, weist mindestens ein Deckelsektor im zweiten Teilbereich eine Deckelvertiefung auf, die zur Aufnahme eines Transponders geeignet ist. Transponder im Deckel machen eine automatische Erkennung und Unterscheidung möglich.

Weiters können die Deckelsektoren mit Dichtungen versehen sein, wodurch das Auslaufen etwaiger Flüssigkeiten verhindert wird.

Als günstig erweist es sich, wenn das Hülsenrohr unmittelbar über dem Gleitring in Schließstellung einen Wulst aufweist. Dadurch ist eine Endposition des Gleitrings beim Schließen festgelegt und es wird ein Abheben des Deckels vom Hülsenrohr verhindert. Außerdem lenkt dieser Wulst beim Öffnen der Hülse die Deckelsektoren nach außen.

### Kurze Beschreibung der Zeichnungen

Anhand der beiliegenden Figuren wird die vorliegende Erfindung näher erläutert. Es zeigt:
Fig. 1 eine perspektivische Ansicht eines Abschnitts einer erfindungsgemäßen Hülse mit geschlossenem Deckel;
Fig. 2 dasselbe, wobei ein Hülsenringteil abgenommen ist;
Fig. 3 diese Hülse mit geöffnetem Deckel;
Fig. 4 einen Achsenschnitt durch die Hülse gemäß den Fig. 1 bis 3 mit geschlossenem Deckel;
Fig. 5 dasselbe mit geöffnetem Deckel;
Fig. 6a-c eine zweite Ausführungsform der vorliegenden Erfindung in verschiedenen Stellungen (geschlossen und verriegelt - geschlossen und entriegelt - geöffnet), analog zu den Fig. 4 und 5;
Fig. 7a-c eine dritte Ausführungsform der vorliegenden Erfindung in verschiedenen Stellungen (geschlossen und verriegelt - geschlossen und entriegelt - geöffnet), analog zu den Fig. 4 und 5;
Fig. 8a-c eine vierte Ausführungsform der vorliegenden Erfindung in verschiedenen Stellungen (geschlossen und verriegelt - geschlossen und entriegelt - geöffnet), analog zu den Fig. 4 und 5; und
Fig. 9a-c eine fünfte Ausführungsform der vorliegenden Erfindung in verschiedenen Stellungen (geschlossen und verriegelt - geschlossen und entriegelt - geöffnet), analog zu den Fig. 4 und 5.

### Weg(e) zur Ausführung der Erfindung

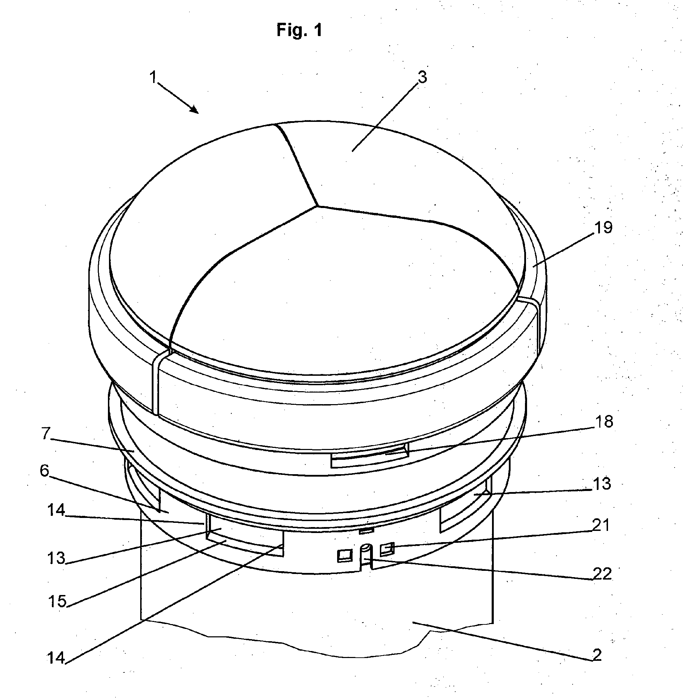

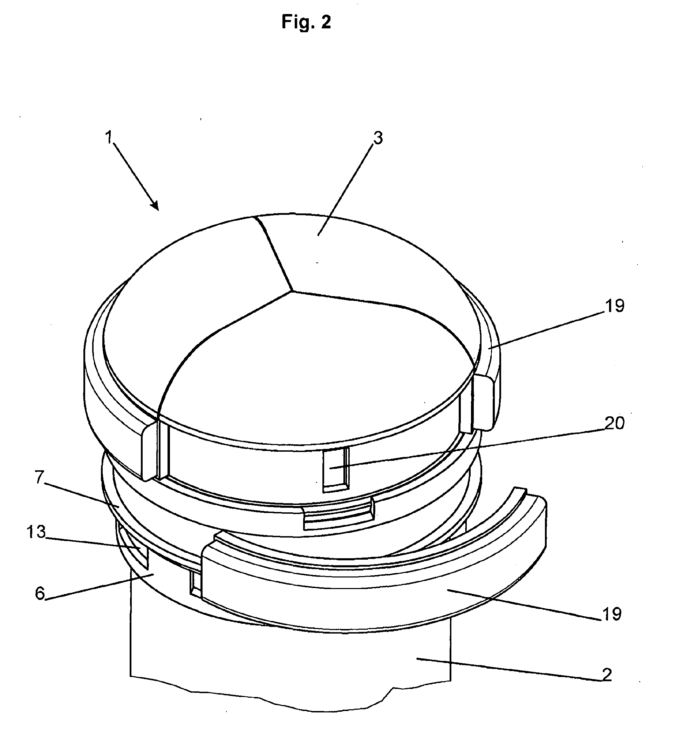

In Fig. 1 ist eine erfindungsgemäße Hülse 1 mit Hülsenrohr 2 und aufgesetztem, öffenbaren Deckel, gebildet aus mehreren Deckelsektoren 3, gezeigt, wobei ein Klemmring 7 einen Gleitring 6 umfasst. Fig. 2 zeigt die gleiche Ansicht, wobei ein Hülsenringteil 19 abgenommen ist, wodurch eine Deckelvertiefung 20, die zur Aufnahme eines Transponders geeignet ist, sichtbar ist.

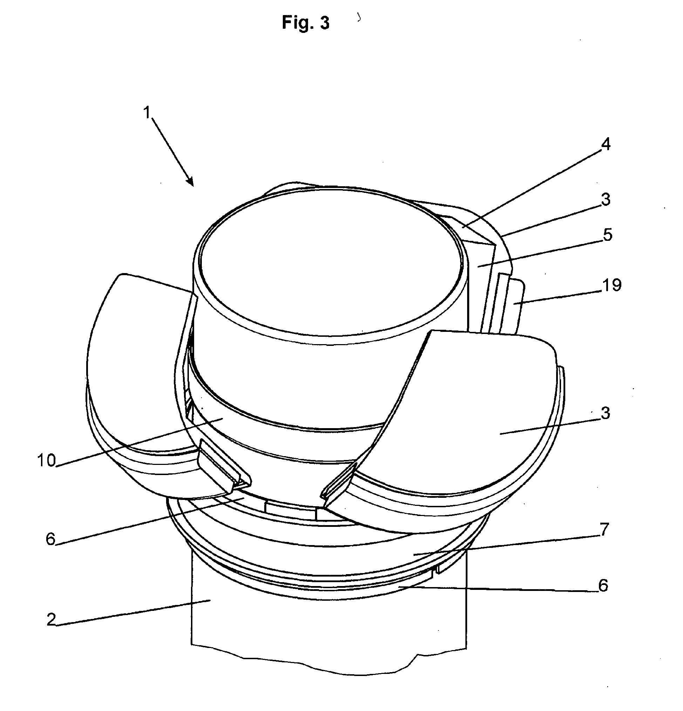

Fig. 3 zeigt die geöffnete Hülse 1, wobei bei der gezeigten Ausführungsform die ersten und zweiten Teilbereiche 4 und 5 der Deckelsektoren 3 normal aufeinander stehen.

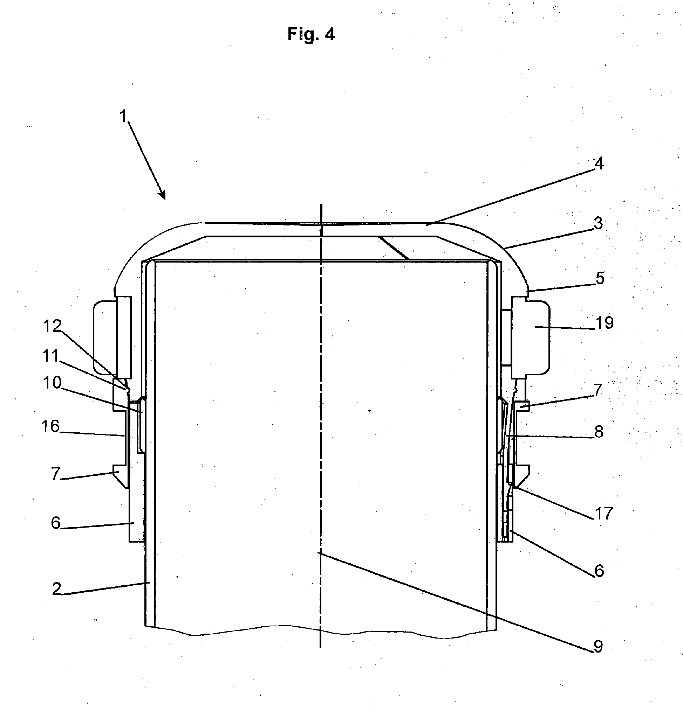

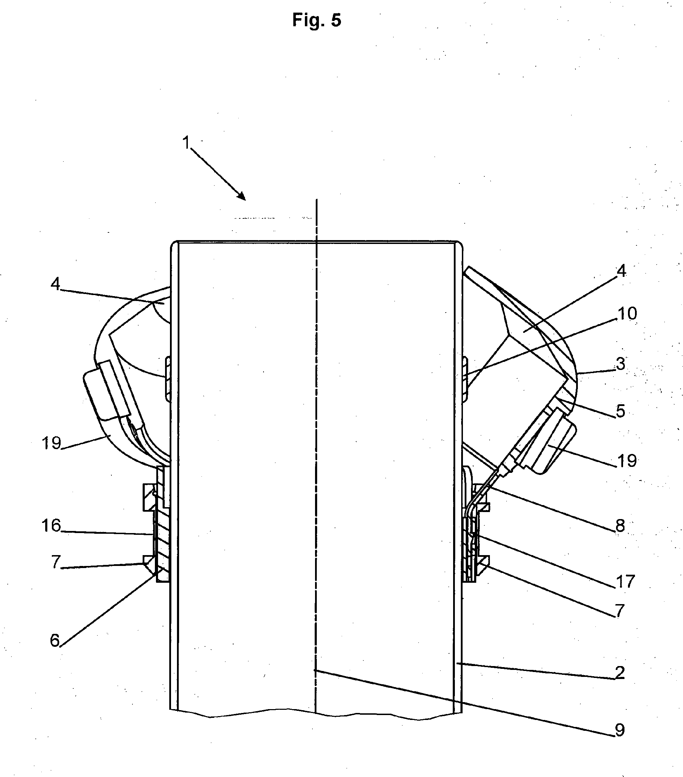

Anhand von Fig. 4 und Fig. 5 wird die Hülse näher erläutert. Auf dem Hülsenrohr 2 mit seiner Längsachse 9 ist zumindest an einem Ende ein automatisch öffenbarer Deckel angebracht. Die einzelnen Deckelsektoren 3 sind über Bandfedern 8 mit einem Gleitring 6 verbunden. Diese Bandfedern 8 sind an den Deckel angeformt und münden in einem unlösbaren Schnappverschluss 17 im Gleitring 6. Ein Klemmring 7 presst in Schließstellung die zweiten Teilbereiche 5 der Deckelsektoren 3 samt Bandfedern 8 in Richtung Längsachse 9. Dadurch werden auch die ersten Teilbereiche 4 in Richtung der Längsachse 9 gedrückt, wodurch die einzelnen Deckelsektoren 3 aneinander gepresst werden und die Hülse 1 verschlossen ist. Durch Dichtungen kann das Auslaufen von Flüssigkeiten verhindert werden. Die Bandfedern 8 benötigen im Gegensatz zu Drehfedern keinen zusätzlichen Raum in radialer Richtung zur Unterbringung des Scharniers.

Wie fast jede Hülse besitzt auch diese einen Hülsenring, der im vorliegenden Fall durch Hülsenringteile 19, die auf die einzelnen Deckelsektoren 3 direkt aufgesetzt sind, realisiert ist.

Um ein ungewolltes Verschieben des Klemmrings 7 zu verhindern, ist eine RastVerbindung 11, 12 zwischen Deckelsektoren 3 und Klemmring 7 vorgesehen. In Fig. 4 sind die Rastvorsprünge 11 des Klemmrings 7 in den Rastvertiefungen 12 der Deckelsektoren 3 eingerastet.

Der Klemmring 7 besitzt auf der vom Hülsenrohr 2 abgewandten Seite eine Nut 16. Bei diesem Ausführungsbeispiel ist sie als Ringnut ausgeformt. Beim Öffnen der Hülse 1 greift ein Festhaltemechanismus möglichst formschlüssig in die Nut 16 ein und hält den Klemmring 7 fest, während ein Fördermechanismus die Hülse 1 weiterschiebt.

Der Gleitring 6 besitzt Ausnehmungen 13 (Fig. 1), die in Richtung Hülsenrohrende offen sein können, aber im vom Hülsenrohrende entfernten Teil eine in Umfangsrichtung verlaufende Begrenzung 15 (Fig. 1) aufweisen. Der Klemmring 7 besitzt Verdickungen, die in diese Ausnehmungen 13 eingreifen. Beim Öffnen gleiten die Verdickungen des Klemmrings 7 in den Ausnehmungen 13 des Gleitrings 6 parallel zur Längsachse 9 vom Hülsenrohrende weg. Dieses Wegbewegen des Klemmrings 7 vom Rohrende gibt die Bandfedern 8 frei und diese klappen die Deckelsektoren 3 von der Längsachse 9 weg. Damit dafür genug Platz zur Verfügung steht, ist im Klemmring 7 für jede Bandfeder 8 eine Ausnehmung 18 vorgesehen. Diese Hülse ist also selbstöffnend. Nach einer gewissen Wegstrecke sitzen die Verdickungen des Klemmrings 7 auf den Begrenzungen 15 der Ausnehmungen 13 auf. Dieses Aufsitzen erfolgt vorzugsweise in einem Formschluss. Z.B. besitzt die Verdickung des Klemmrings 7 eine Abschrägung, wobei das rohrferne Ende der Abschrägung vom Rohrende weiter entfernt ist als das rohrnahe, und die Begrenzung 15 ist gegengleich geformt. Während das Hülsenrohr 2 in weiterer Folge weiterbefördert wird, hält die Festhaltemechanik den Klemmring 7 samt Gleitring 6 fest, und die gleitringnahen Enden der Deckelsektoren 3 gleiten achsenparallel entlang dem Hülsenrohr 2 von dessen Ende weg. Die Begrenzungen 14 in Umfangrichtung der Ausnehmungen 13 und die eingreifenden Verdickungen des Klemmrings 7 sind nahezu formschlüssig zueinander und achsparallel ausgebildet. Dies verhindert ein seitliches Verrutschen des Klemmrings 7 gegenüber dem Gleitring 6.

Am Hülsenrohr 2 sind Wülste 10, hier in Form eines geschlossenen Rings (wie auch in Fig. 3 deutlich sichtbar) ausgeführt. Diese Wülste 10 bilden beim Schließen einen Endanschlag für den Gleitring 6. Sie verhindern ein Abheben des geschlossenen Deckels vom Hülsenrohr 2 in Schließstellung, da die Deckelsektoren 3 mit dem Gleitring 6 über die Bandfedern 8 verbunden sind.

Unter Bezugnahme auf Fig. 1 sollen noch einige Details erwähnt werden. So ist der im Achsschnitt sichtbare Schnappverschluss 17 durch zwei weitere Schnappverbindungen 21 ergänzt. Zweckmäßig ist es in diesem Fall, wenn im vom Hülsenrohrende entfernten Bereich des Gleitrings 6 eine Wartungsöffnung 22 vorgesehen ist, die im vom Hülsenrohrende am weitesten entfernten Bereich frei von einer Begrenzung durch den Gleitring 6 ist. Mit Hilfe solch einer Wartungsöffnung 22 kann eine Bandfeder 8, falls notwendig, entfernt werden.

In anderen Ausführungsformen können insbesondere die Bandfedern 8 samt ihren Befestigungen anders als eben beschrieben ausgeführt sein. Dabei können andere Befestigungsarten der Bandfedem 8 vorgesehen sein. So können auf den zweiten Teilbereichen 5 der Deckelsektoren 3 Deckel-Rastausnehmungen vorgesehen sein, in denen entsprechende Rastvorsprünge des deckelseitigen Endbereichs der Bandfedern 8 einrasten. Weiters können im Gleitring 6 Befestigungsausnehmungen vorgesehen sein, um die Bandfedern 8 am Gleitring 6 befestigen zu können.

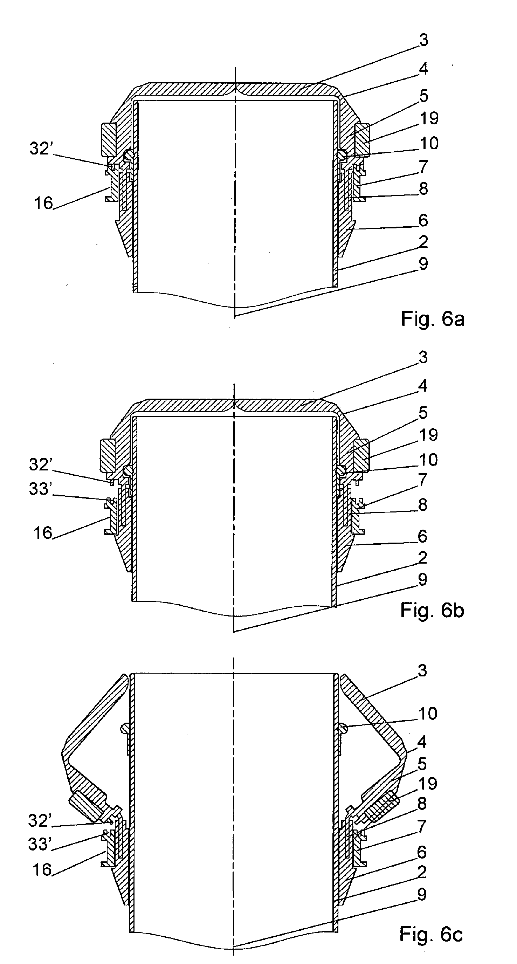

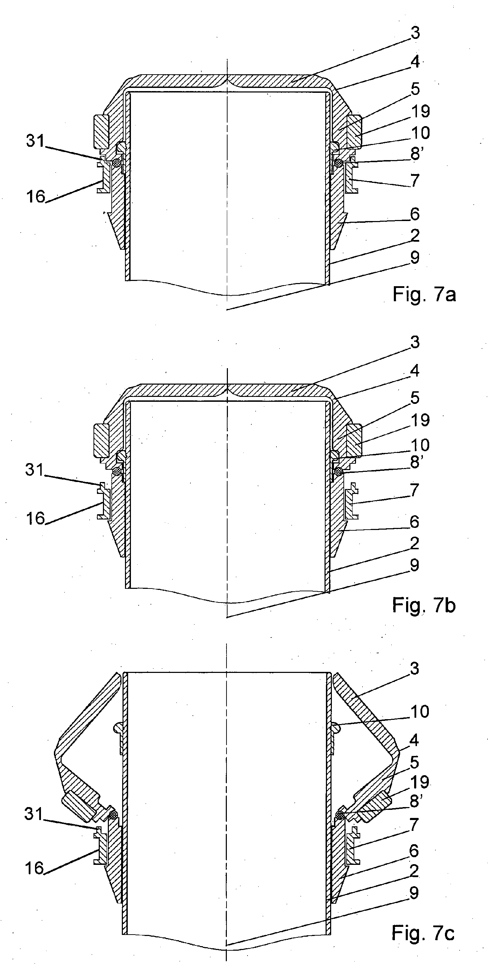

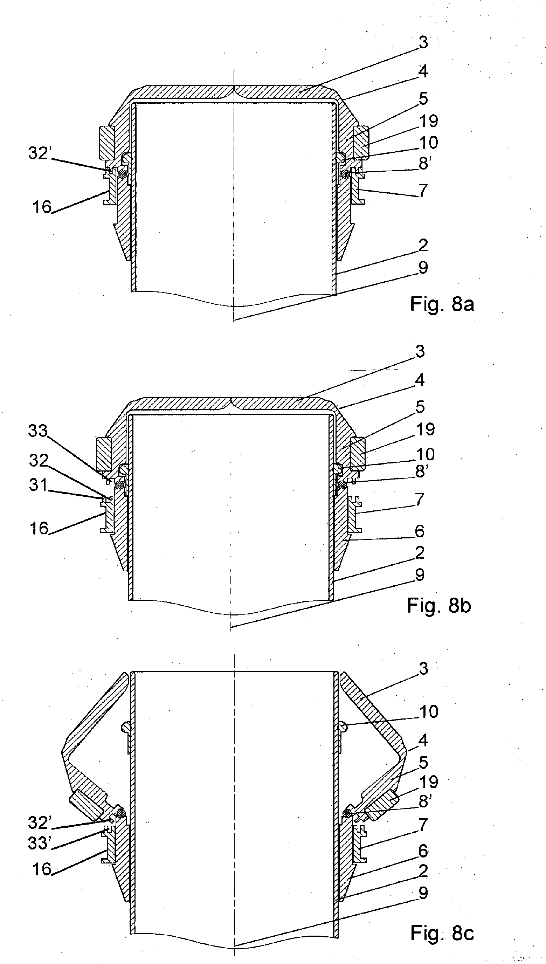

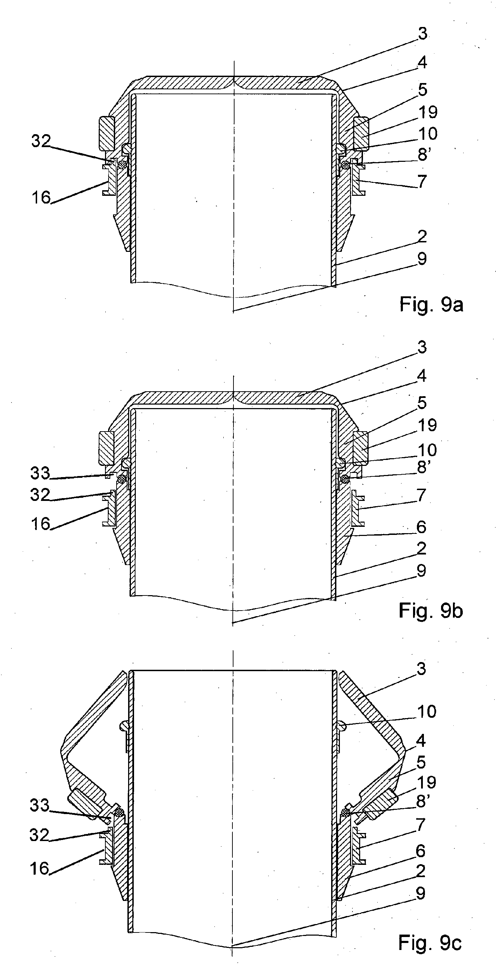

Die zweite Ausführungsform gemäß den Fig. 6a-c; die dritte Ausführungsform gemäß den Fig. 7a-c; die vierte Ausführungsform gemäß den Fig. 8a-c; und die fünfte Ausführungsform gemäß den Fig. 9a-c unterscheiden sich von der ersten Ausführungsform in der Art der formschlüssigen Verbindung zwischen dem Klemmring 7 und den zweiten Abschnitten 5 der Deckelsektoren 3 sowie in der Art der schwenkbaren Lagerung der Deckelsektoren 3. Bei der ersten und der zweiten Ausführungsform erfolgt die schwenkbare Lagerung mittels Bandfedern 8, bei der dritten bis fünften Ausführungsform jedoch über ein Scharnier mit einer Achse 8'. Bei der ersten und der dritten Ausführungsform erfolgt die formschlüssige Verbindung dadurch, dass der Klemmring 7 die zweiten Abschnitte 5 mit Vorsprüngen 31 umgreift. Bei der fünften Ausführungsform weist der Klemmring 7 einen Vorsprung 32 auf, der in eine Ausnehmung 33 in den zweiten Abschnitten 5 der Deckelsektoren 3 eingreift. Bei der zweiten und der vierten Ausführungsform ist es umgekehrt, da weisen die zweiten Abschnitte 5 der Deckelsektoren 3 einen Vorsprung 32' auf, der in eine Ausnehmung 33' im Klemmring 7 formschlüssig eingreift.

Es ist nicht immer eindeutig, was Vorsprung und was Ausnehmung ist. So könnte man bei der zweiten und der vierten Ausführungsform ebenso sagen, dass der Klemmring 7 die zweiten Abschnitte 5 der Deckelsektoren 3 mit Vorsprüngen 31 umfasst und zusätzlich einen Vorsprung 32 aufweist, der in eine Vertiefung 33 in den zweiten Abschnitten 5 der Deckelsektoren 3 eingreift. Die Fig. 8b ist in diesem Sinne beschriftet.

Bei der zweiten bis vierten Ausführungsform weist der Wulst 10 oben eine Verdickung auf, die mit einer entsprechenden Ausnehmung in den Deckelsektoren korrespondiert. Dadurch werden bei einer Abwärtsbewegung des Gleitrings 7 die Deckelsektoren 3 nach außen gedrückt, was eine Federvorspannung entbehrlich macht.

## Patentansprüche

1. Hülse (1) für eine Rohrpostanlage mit einem Hülsenrohr (2), das mit mindestens einem Deckel, der aus mehreren Deckelsektoren (3) gebildet ist, verschlossen ist, wobei die Hülse (1) mittels eines Gleitrings (6) öffenbar und schließbar ist, wobei der Gleitring (6) parallel zur Längsachse (9) der Hülse (1) bewegbar ist und das Hülsenrohr (2) umschließt; die Deckelsektoren (3) aus je zwei Teilbereichen bestehen, nämlich aus einem ersten Teilbereich (4) und einem zweiten Teilbereich (5); die ersten Teilbereiche (4) In Schließstellung das Hülsenrohr (2) abschließen; die zweiten Teilbereiche (5) an die ersten Teilbereiche (4) angeformt sind, das Hülsenrohr (2) in einem Endabschnitt umfassen und am Gleitring (6) schwenkbar befestigt sind, wobei weiters ein Klemmring (7) vorgesehen ist, der in Schließposition mit den zweiten Teilbereichen (5) der Deckelsektoren (3) formschlüssig zusammenwirkt und so die Deckelsektoren (3) geschlossen hält, **dadurch gekennzeichnet, dass** der Klemmring (7) einen oder mehrere axiale Vorsprünge (32) aufweist, die in Schließposition in entsprechende Vertiefungen (33) der zweiten Teilbereiche (5) der Deckelsektoren (3) formschlüssig eingreifen, oder dass die zweiten Teilbereiche (5) der Deckelsektoren (3) einen oder mehrere Vorsprünge (32') aufweisen, die in Schließposition in entsprechende Vertiefungen (33') des Klemmrings (7) formschlüssig eingreifen.

2. Hülse nach Anspruch 1, **dadurch gekennzeichnet, dass** der Gleitring (6) mittels des Klemmrings (7) parallel zur Längsachse (9) der Hülse (1) bewegbar ist.

3. Hülse nach Anspruch 1 oder 2, **dadurch gekennzeichnet, dass** der Klemmring (7) rohrseitig Rastvorsprünge (11) aufweist und die Deckelsektoren im zweiten Teilbereich (5) gegengleiche Rastvertiefungen (12) aufweisen bzw. der Klemmring (7) die Vertiefungen aufweist und die Deckelsektoren (3) die Vorsprünge aufweisen, sodass in Schließstellung die Rastvorsprünge in den Rastvertiefungen einrasten.

4. Hülse nach Anspruch 2 oder 3, **dadurch gekennzeichnet, dass** der Gleitring (6) mindestens eine Ausnehmung (13) mit einer Begrenzung (15) auf der vom Ende des Hülsenrohrs abgewandten Seite aufweist und der Klemmring (7) rohrseitig mindestens eine Verdickung besitzt, die in der Ausnehmung (13) achsparallel verschiebbar ist, und dass beim Öffnen die Verdickung auf dieser Begrenzung (15) der Ausnehmung (13) des Gleitrings (6) in Aufsitz kommt und in der Offenstellung auf dieser Begrenzung (15) aufsitzt.

5. Hülse nach einem der Ansprüche 2 bis 4, **dadurch gekennzeichnet, dass** der Gleitring (6) mindestens eine Ausnehmung (13) aufweist, die achsparallele Begrenzungen (14) aufweist, und dass der Klemmring (7) rohrseitig zumindest eine Verdickung besitzt, die in der zumindest einen Ausnehmung (13) des Gleitrings in Umfangsrichtung formschlüssig eingreift.

6. Hülse nach einem der Ansprüche 1 bis 5, **dadurch gekennzeichnet, dass** der Klemmring (7) eine zum Rohrumfang parallele Nut (16) auf der dem Hülsenrohr (2) abgewandten Seite aufweist.

7. Hülse nach einem der Ansprüche 1 bis 6, **dadurch gekennzeichnet, dass** zur schwenkbaren Befestigung der zweiten Teilbereiche (5) am Gleitring (6) von den zweiten Teilbereichen (5) aus zumindest je eine Bandfeder (8) anschließt und in dem Gleitring (6) fixiert ist.

8. Hülse nach Anspruch 7, **dadurch gekennzeichnet, dass** die Bandfedern (8) im Gleitring (6) mit einem unlösbaren Schnappverschluss (17) gehalten sind.

9. Hülse nach Anspruch 7, **dadurch gekennzeichnet, dass** der Gleitring (6) im vom Ende des Hülsenrohrs fernen Bereich Befestigungsausnehmungen, die zur Aufnahme von Befestigungsmitteln zur Befestigung der Bandfedern (8) geeignet sind, besitzt.

10. Hülse nach einem der Ansprüche 1 bis 9, **dadurch gekennzeichnet, dass** an den einzelnen Deckelsektoren (3) im zweiten Teilbereich (5) Hülsenringteile (19) aufgebracht sind.

11. Hülse nach einem der Ansprüche 1 bis 10, dadurch gekenntzeichnet, dass zumindest ein Deckelsektor (3) im zweiten Teilbereich (5) eine Deckelvertiefung (20) aufweist, die zur Aufnahme eines Transponders geeignet ist.

12. Hülse nach einem der Ansprüche 1 bis 11, **dadurch gekennzeichnet, dass** die Deckelsektoren mit Dichtungen versehen sind.

13. Hülse (1) nach einem der Ansprüche 1 bis 12, **dadurch gekennzeichnet, dass** das Hülsenrohr (2) unmittelbar über dem Gleitring (6) in Schließstellung einen Wulst (10) aufweist.

## Claims

1. A cartridge (1) for a pneumatic mail system having a cartridge tube (2) which is closed with at least one lid formed from a plurality of lid sectors (3), wherein the cartridge (1) can be opened and closed by means of a slide ring (6), wherein the slide ring (6) can be moved parallel to the longitudinal axis (9) of the cartridge (1) and surrounds the cartridge tube (2); the lid sectors (3) consist of in each case two sub-regions, namely of a first sub-region (4) and a second sub-region (5); the first sub-regions (4) close off the cartridge tube (2) in the closed position; the second sub-regions (5) are pre-formed on the first sub-regions (4), embrace the cartridge tube (2) in an end section and are pivotably secured to the slide ring (6), wherein furthermore there is provided a clamping ring (7) which in the closed position cooperates in a form-locking manner with the second sub-regions (5) of the lid sectors (3) and thus holds the lid sectors (3) closed, **characterised in that** the clamping ring (7) has one or more axial projections (32) which in the closed position engage in a form-locking manner into corresponding depressions (33) of the second sub-regions (5) of the lid sectors (3), or in that the second sub-regions (5) of the lid sectors (3) have one or more projections (32') which in the closed position engage in a form-locking manner into corresponding depressions (33') of the clamping ring (7).

2. A cartridge according to claim 1, **characterised in that** the slide ring (6) can be moved by means of the clamping ring (7) parallel to the longitudinal axis (9) of the cartridge (1).

3. A cartridge according to claim 1 or 2, **characterised in that** the clamping ring (7) has on the tube side latching projections (11), and the lid sectors have in the second sub-region (5) mirror-inverted latching depressions (12), or the clamping ring (7) has the depressions and the lid sectors (3) have the projections, so that in the closed position the latching projections latch in the latching depressions.

4. A cartridge according to claim 2 or 3, **characterised in that** the slide ring (6) has at least one recess (13) with a limit (15) on the side that is remote from the end of the cartridge tube, and the clamping ring (7) has on the tube side at least one thickened portion which is displaceable in the recess (13) parallel to the axis, and **in that** in the event of opening the thickened portion comes to sit on this limit (15) of the recess (13) of the slide ring (6) and in the open position sits on this limit (15).

5. A cartridge according to one of claims 2 to 4, **characterised in that** the slide ring (6) has at least one recess (13) that has axially parallel limitations (14), and **in that** the clamping ring (7) on the tube side has at least one thickened portion which engages in a form-locking manner in the circumferential direction in the at least one recess (13) of the slide ring.

6. A cartridge according to one of claims 1 to 5, **characterised in that** the clamping ring (7) has a groove (16), parallel to the tube circumference, on the side remote from the cartridge tube (2).

7. A cartridge according to one of claims 1 to 6, **characterised in that** in order to secure the second sub-regions (5) pivotably to the slide ring (6) following on from the second sub-regions (5) there is at least in each case one leaf spring (8) and this is fixed in the slide ring (6).

8. A cartridge according to claim 7, **characterised in that** the leaf springs (8) are held in the slide ring (6) with a non-detachable snap lock (17).

9. A cartridge according to claim 7, **characterised in that** the slide ring (6) has in the region that is remote from the end of the cartridge tube securing recesses that are suitable for accommodating securing means for securing the leaf springs (8).

10. A cartridge according to one of claims 1 to 9, **characterised in that** cartridge ring portions (19) are applied to the individual lid sectors (3) in the second sub-region (5).

11. A cartridge according to one of claims 1 to 10, **characterised in that** at least one lid sector (3) in the second sub-region (5) has a lid depression (20) that is suitable for accommodating a transponder.

12. A cartridge according to one of claims 1 to 11, **characterised in that** the lid sectors are provided with seals.

13. A cartridge (1) according to one of claims 1 to 12, **characterised in that** the cartridge tube (2) has a bead (10) directly above the slide ring (6) in the closed position.

## Revendications

1. Curseur (1) pour un système de transport par tube pneumatique, pourvu d'une enveloppe de curseur (2) laquelle est fermée à l'aide d'au moins un couvercle formé de plusieurs segments de couvercle (3), ledit curseur (1) pouvant être ouvert et fermé au moyen d'une bague coulissante (6), la bague coulissante (6) pouvant être déplacée parallèlement à l'axe longitudinal (9) du curseur (1) et entourant l'enveloppe de curseur (2); chacun des segments de couvercle (3) étant constitué de deux zones partielles, à savoir d'une première zone partielle (4) et d'une deuxième zone partielle (5); les premières zones partielles (4) ferment l'enveloppe de curseur (2) dans la position de fermeture; les deuxièmes zones partielles (5) étant formées sur les premières zones partielles (4) tout en entourant une partie terminale de l'enveloppe de curseur (2) et en étant montées pivotantes sur la bague coulissante (6), une bague de serrage (7) étant en outre destinée à coopérer, par complémentarité de forme, avec les deuxièmes zones partielles (5) des segments de couvercle (3) lorsque ceux-ci adoptent la position de fermeture, pour ainsi maintenir les segments de couvercle (3) fermés, **caractérisé en ce que** la bague de serrage (7) présente une ou plusieurs saillies axiales (32) lesquelles viennent s'engager par complémentarité de forme, en position de fermeture, dans des cavités correspondantes (33) ménagées dans les deuxièmes zones partielles (5) des segments de couvercle (3), ou que les deuxièmes zones partielles (5) des segments de couvercle (3) comportent une ou plusieurs saillies (32') lesquelles viennent s'engager par complémentarité de forme, en position de fermeture, dans des cavités correspondantes (33') ménagées dans la bague de serrage (7).

2. Curseur selon la revendication 1, **caractérisé en ce que** la bague coulissante (6) peut être déplacée parallèlement à l'axe longitudinale (9) du curseur (1) au moyen de la bague de serrage (7).

3. Curseur selon les revendications 1 ou 2, **caractérisé en ce que** la bague de serrage (7) présente, du côté de l'enveloppe, des saillies d'encliquetage (11) et les segments de couvercle présentent, dans la deuxième zone partielle (5), des cavités d'encliquetage (12) correspondantes, ou bien la bague de serrage (7) présente lesdites cavités et les segments de couvercle (3) présentent lesdites saillies, pour faire en sorte qu'en position de fermeture, les saillies d'encliquetage viennent s'encliqueter dans les cavités d'encliquetage.

4. Curseur selon les revendications 2 ou 3, **caractérisé en ce que** la bague coulissante (6) présente au moins un évidement (13) dont une limite (15) est située à l'opposé de l'extrémité de l'enveloppe de curseur alors que la bague de serrage (7) possède, du côté de l'enveloppe, au moins une surépaisseur pouvant être déplacée parallèlement à l'axe dans l'évidement (13), ladite surépaisseur venant se poser, lors de l'ouverture, sur la limite (15) de l'évidement (13) de la bague coulissante (6) pour ainsi reposer, en position d'ouverture, sur la limite (15).

5. Curseur selon l'une des revendications 2 à 4, **caractérisé en ce que** la bague coulissante (6) présente au moins un évidement (13) pourvu de limites (14) orientées parallèlement à l'axe, et que la bague de serrage (7) possède, du côté de l'enveloppe, au moins une surépaisseur laquelle vient s'engager par complémentarité de forme, selon le sens circonférentiel, dans l'au moins un évidement (13) de la bague coulissante.

6. Curseur selon l'une des revendications 1 à 5, **caractérisé en ce que** la bague de serrage (7) présente, à l'opposé de l'enveloppe de curseur (2), une rainure (16) orientées parallèlement à la circonférence de l'enveloppe.

7. Curseur selon l'une des revendications 1 à 6, **caractérisé en ce que** chacune des deuxièmes zones partielles (5) se prolonge par un ressort lamelle (8) qui est fixé dans la bague coulissante (6) et qui permet ainsi un montage pivotant des deuxièmes zones partielles (5) sur la bague coulissante (6).

8. Curseur selon la revendication 7, **caractérisé en ce que** les ressorts-lamelle (8) sont tenus dans la bague coulissante (6) au moyen d'un dispositif de verrouillage (17) à encliquetage irréversible.

9. Curseur selon la revendication 7, **caractérisé en ce que**, dans la zone éloignée de l'extrémité de l'enveloppe de curseur, la bague coulissante (6) possède des évidements de fixation adaptés à recevoir des moyens de fixation destinés à fixer les ressorts-lamelle (8).

10. Curseur selon l'une des revendications 1 à 9, **caractérisé en ce qu'**au sein de la deuxième zone partielle (5), les différents segments de couvercle (3) sont pourvus d'éléments d'anneau de curseur (19).

11. Curseur selon l'une des revendications 1 à 10, **caractérisé en ce qu'**au moins un segment de couvercle (3) présente, dans la deuxième zone partielle (5), une cavité de couvercle (20) adaptée à recevoir un transpondeur.

12. Curseur selon l'une des revendications 1 à 11, **caractérisé en ce que** lesdits segments de couvercle sont pourvus de joints d'étanchéité.

13. Curseur (1) selon l'une des revendications 1 à 12, **caractérisé en ce que** l'enveloppe de curseur (2) présente, en position de fermeture, un bourrelet (10) situé immédiatement en-dessus de la bague coulissante (6).
